Europäisches Patentamt

European Patent Office

Office européen des brevets

(19)

(11) Numéro de publication: **0 018 441**
**A1**

# (12) DEMANDE DE BREVET EUROPEEN

(21) Numéro de dépôt: **79200194.3**

(22) Date de dépôt: **17.04.79**

(51) Int. Cl.³: **B 01 F 7/16**
**A 23 N 17/00**

(43) Date de publication de la demande:
**12.11.80 Bulletin 80/23**

(84) Etats Contractants Désignés:
**CH DE FR GB IT NL SE**

(71) Demandeur: **Vandermeulen, Paul Franscisus Ghislain**
**Kwadepasstraat, 59**
**B-3350 Linter(BE)**

(72) Inventeur: **Vandermeulen, Paul Franscisus Ghislain**
**Kwadepasstraat, 59**
**B-3350 Linter(BE)**

(74) Mandataire: **Vlassak, Ewald**
**Vital Decosterstraat, 43**
**B-3000 Leuven(BE)**

(54) **Mélangeur pour aliments de bétail.**

(57) Un mélangeur pour aliments de bétails sous forme d'entonnoir se composant d'un cône tronqué renversé et d'un axe fileté monté à l'intérieur de l'entonnoir. Dans le fond de l'entonnoir il y a une ou plusieurs ouvertures dans la paroi à travers lesquelles les substances mélangées arrivent dans un ou dans plusieurs tuyaux montés à l'extérieur de l'entonnoir, dans lequel sont montés un ou plusieurs axes filetés refoulants qui versent la substance à nouveau uniformément dans l'entonnoir ou les transportent ailleurs.

EP 0 018 441 A1

Croydon Printing Company Ltd.

## Description du mélangeur universel.

Construction : Entonnoir se composant d'un cône tronqué renversé avec un point central sur toute la hauteur du cône, au partiellement de cette dernière, un axe fileté refoulant, actionné directement ou indirectement par un moteur ou n'importe quelle autre source d'energie.

L'axe fileté est muni de barres placées horizontalement ou en oblique, des plaques ou des ressorts sur la largeur entière ou partielle de l'entonnoir, de telle manière que ceux-ci aient un effet broyant. Dans le fond de l'entonnoir il y a une ou plusieurs ouvertures dans le paroi à travers lesquelles les substances mélangées arrivent dans u ou dans plusieurs tuyaux montés à l'extérieur de l'entonnoir, dans lequel sont montésun ou plusieurs axes filetés refoulantes qui versent la substance à nouveau uniformément dans l'entonnoir ou les tranportent ailleurs. Le ou les axes filetés sont actionnés directement ou indirectement par un deuxième ou par plusieurs moteurs ou n'imorte quelle autre force motrice.

Le ou les tuyaux de renvoi sont également munis d'un clapet par lequel le mélange peut être vidé ou transporté au moyen d'un autre système. Les axes filetés peuvent

- 2 -

être mises en action séparément ou simultanément.

Caractéristiques essentielles :

- En forme d'entonnoir
- Canal ou canaux de renvoi montés le long de la paroi de l'entonnoir.
- Le mélange se fait par deux ou plusieurs axes filetés par lz lesquels un double mélange se produit; d'autre part, par un ou plusieurs axes filetés ( vis d'Archimède) à l'intérieur de l'entonnoir, et d'autre part par un ou plusieurs axes filetés, dans les tuyaux le long de la paroi de l'entonnoir, qui provoquent la circulation du mélange.
- Le mélangeur peut être installé aussi bien dans le sol que sur ou audessus de celui-ci.
- La base du ou des tuyaux de renvoi est placé plus bas que la base de l'entonnoir tronqué.
- Le mélangeur peut faire fonction comme point central d'une unité de mélange et de composition d'aliments pour bétail
- è Le mélangeur est concu en première instance pour le mélange et la composition d'aliments pour bétail avec du mais broyé ou râpé d'une grande tenuer en humidité

Toutes les dimensions, sources d'énergei, matériaux uitilisés, formes et moyens de mémarrage peuvent être différents, même entr'eux , selon le but, l'utilistation et la destination du mélangeur, compte tenu des prescriptions légales en ce wui concerne les presciptions de sécurité.

Le demandeur.

VLASSAK EWALD
ADVOKAAT
VITAL DECOSTERSTRAAT 43

Caractéristiques spécifiques de l'invention

" Mélangeur universel "

- Sous forme d'entonnoir de dimensions illimitées.
  Construction de la base de la machine de manière à ce que
  l'entonnoir se vide entièrement dans les canaux de renvoi.
- Circulation double de la substance par, d'une part un axe
  fileté refoulant à l'intérieur de l'entonnoir, et d'autre part
  par un ou plusieurs axes filetés montés le long de la paroi
  extérieure de l'entonnoir et qui déversent ainsi à nouveau
  la matière première par le dessus dans l'entonnoir.
- Peut- être installé et fontionner aussi bien au- dessus ,
  sur, ou dans le sol.
 - Des éléments broyants montés sur l'axe fileté à l'intérieur
   de l'entonnoir
 - Les axes filetés peuvent être mises en action séparément ou
   simultanément

**Office européen des brevets**

## RAPPORT DE RECHERCHE EUROPEENNE

Numéro de la demande

EP 79 20 0194

| | DOCUMENTS CONSIDERES COMME PERTINENTS | | CLASSEMENT DE LA DEMANDE (Int. Cl ¹) |
|---|---|---|---|
| Catégorie | Citation du document avec indication, en cas de besoin, des parties pertinentes | Revendication concernee | |
| X | <u>BE - A - 867 448</u> (P. VAN DER MEU-LEN) <br><br> * En entier * <br><br> -- | carac-téris-tiques | B 01 F 7/16 <br> A 23 N 17/00 |
| X | <u>BE - A - 864 434</u> (P. VAN DER MEU-LEN) <br><br> * En entier * <br><br> -- -- | carac-téris-tiques | |
| | <u>GB - A - 460 342</u> (H. SIMON) <br><br> * En entier * <br><br> -- -- -- -- | carac-téris-tiques | |

**DOMAINES TECHNIQUES RECHERCHES (Int. Cl. ³)**

B 01 F
A 23 N

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| Le présent rapport de recherche a été établi pour toutes les revendications | | |
|---|---|---|
| Lieu de la recherche | Date d'achèvement de la recherche | Examinateur |
| La Haye | 19.08.1980 | KUSARDY |

OEB Form 1503.1 06.78